# FASCICULE DE BREVET EUROPEEN

(11) **EP 1 293 375 B1**
(45) Date de publication et mention de la délivrance du brevet: **11.08.2010**
(21) Numéro de dépôt: 02292252.0
(22) Date de dépôt: 13.09.2002
(51) Int. Cl.: B60W 50/02, F16H 61/12, B60W 30/18, B60W 10/02, B60W 10/10

(54) **Procédé de commande des électrovannes de sélection et d'embrayage d'une transmission automatisée**
Verfahren zur Steuerung der Kupplungs- und Schaltventile eines automatisierten Schaltgetriebes
Method for controlling main clutch and shift valves in an automated transmission

(30) Priorité: 14.09.2001 FR 0111912
(43) Date de publication de la demande: 19.03.2003
(73) Titulaire: RENAULT S.A.S., 92100 Boulogne Billancourt (FR)
(72) Inventeur: Berdah, Cathy, 92500 Rueil Malmaison (FR); Rivoiron, Sylvain, 95320 Saint Leu la Fôret (FR)

(56) Documents cités:
- FR-A- 2 727 488
- FR-A- 2 788 243
- US-A- 5 251 733
- US-A- 5 790 969
- PATENT ABSTRACTS OF JAPAN vol. 015, no. 283 (M-1137), 18 juillet 1991 (1991-07-18) & JP 03 099947 A (ZEXEL CORP), 25 avril 1991 (1991-04-25)
- PATENT ABSTRACTS OF JAPAN vol. 009, no. 307 (M-435), 4 décembre 1985 (1985-12-04) & JP 60 143142 A (ISUZU JIDOSHA KK), 29 juillet 1985 (1985-07-29)

## Description

La présente invention concerne la commande des transmissions automatisées. Plus précisément, elle concerne la commande des électrovannes d'une transmission automatisée en situation de défaillance.

Elle a pour objet un procédé de commande des électrovannes pilotant l'ouverture et la fermeture de l'embrayage d'entrée, la sélection et l'engagement des rapports d'une transmission automatisée disposant d'un mode automatique et d'un mode manuel.

Cette invention trouve une application sur les transmissions constituées d'un embrayage d'entrée et d'une boîte de vitesses à arbres parallèles et à baladeurs, actionnés par un ensemble électro-hydraulique de commande placé sous le contrôle d'un calculateur, et disposant d'un mode manuel et d'un mode automatique sélectionnables par le conducteur.

Selon une disposition classique dans le domaine, par example comme montrée par le brevet FR 2788243 correspondant au préambule de la revendication 1 l'ensemble électro-hydraulique, réalise les fonctions d'embrayage et de débrayage (fermeture et ouverture de l'embrayage d'entrée), de sélection, et de passage des vitesses. Ces fonctions sont alors assurées par des actuateurs hydrauliques, pilotés par des électrovannes.

En cas de défaillance de type court circuit à la masse, ou déconnexion d'une électrovanne de sélection ou d'engagement de rapport, la stratégie habituelle de sécurité de fonctionnement consiste à rester sur le rapport déjà engagé jusqu'à l'arrêt complet du véhicule. En cas d'impossibilité de quitter le rapport engagé pour passer au neutre, cette stratégie, acceptable du point de vue de la sécurité, ne peut pas pallier tous les cas de pannes immobilisantes.

La présente invention vise à éviter les pannes immobilisantes en cas de défaillance d'une électrovanne de commande de transmission automatisée.

Dans ce but, elle propose de mettre en oeuvre des modes de fonctionnement dégradés de la transmission, adaptés aux situations rencontrées.

Conformément à l'invention, la défaillance d'une des électrovannes impose à la transmission le mode manuel en autorisant le conducteur à engager les rapports restant disponibles.

En règle générale, le court circuit à la masse ou la déconnexion d'une des électrovannes d'engagement de rapport en roulage, provoque le blocage de la transmission sur le rapport engagé.

Par ailleurs, le court-circuit d'alimentation de l'électrovanne d'engagement de la marche arrière et des rapports de rang pair alors qu'un rapport de rang impair est engagé, peut provoquer l'activation temporaire de l'électrovanne d'engagement des rapports de rang impair, pour permettre le rappel en sélection avant l'engagement d'un rapport de rang pair.

D'autres caractéristiques et avantages de la présente invention apparaîtront clairement à la lecture de la description suivante d'un mode de réalisation particulier de celle-ci, en se référant aux dessins annexés, sur lesquels :
- la figure 1 décrit un schéma hydraulique de commande de transmission automatisée, non limitatif de l'application de l'invention, et
- les figures 2 à 6 illustrent différentes stratégies de commande proposées par l'invention.

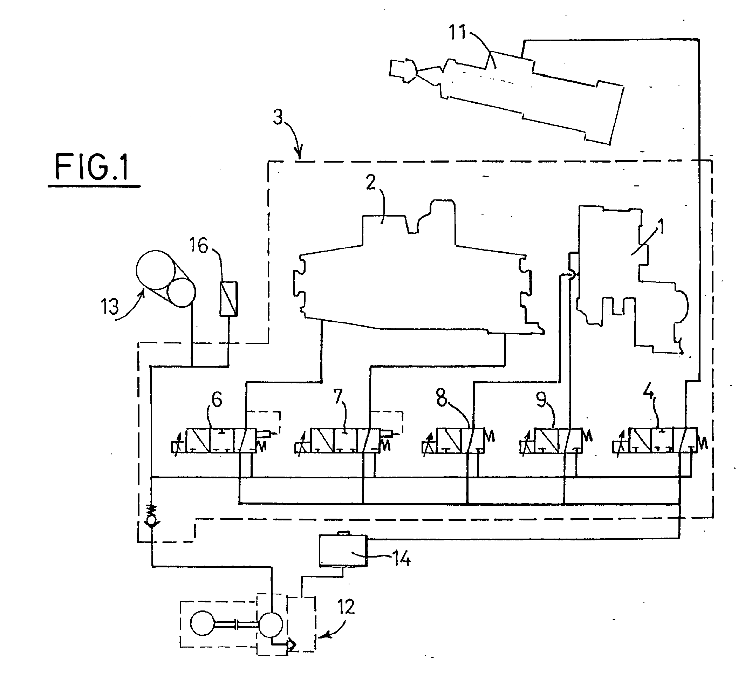

Sur la figure 1, on a fait apparaître à l'intérieur d'un trait pointillé différents éléments d'un bloc de commande électro-hydraulique 3 de type connu d'une boîte de vitesses robotisée à cinq rapports de marche avant, et un rapport de marche arrière, avec trois lignes de sélection, respectivement un-deux, trois-quatre et cinquième-marche arrière. Le bloc 3 regroupe un vérin de sélection de ligne de vitesses 1, un vérin d'engagement de vitesse 2, et cinq électrovannes 4, 6, 7, 8 et 9 (EV0, EV1, EV2, EV3, EV4), pilotant par exemple dans cet ordre l'embrayage, l'engagement de première de troisième et de cinquième, l'engagement de seconde, quatrième et marche arrière, la sélection de la ligne 1-2, et la sélection de la ligne 5-MAR.

A l'extérieur du bloc, on trouve le vérin de commande d'embrayage 11, et les éléments de circuit suivants : un groupe électro-pompe 12, un accumulateur de pression 13, le réservoir d'huile 14 et un capteur de pression 16. Par ailleurs, la partie mécanique de la transmission est munie de façon classique d'un système de rappel élastique (non représenté), capable de la rappeler sur la ligne de sélection centrale, lorsqu'aucun actionneur de sélection n'est activé.

Les électrovannes permettent la mise en communication sélective des actionneurs avec l'accumulateur 13. Au repos, les électrovannes reçoivent la pression de l'accumulateur 13, mais ne la transmettent pas aux actionneurs 1, 2, 11. Lorsqu'elles sont excitées, elles établissent sélectivement la communication entre l'accumulateur et les actionneurs, de façon à mettre ces derniers sous pression selon les consignes du calculateur de la transmission (non représenté).

En cas de court-circuit à la masse ou de déconnexion, les électrovannes ne peuvent plus être actionnées et piloter les actionneurs correspondants.

A l'inverse, en cas de court-circuit d'alimentation, ou « court circuit au + batterie », les électrovannes sont toujours sous tension, et les actionneurs correspondants ne peuvent plus être désactivés.

Selon une disposition courante, mais non limitative, les deux vannes de sélection EV3 et EV4, 8, 9, peuvent être du type tout ou rien, les deux vannes d'engagement EV1 et EV2, 6, 7 du type proportionnel pilotée en pression, et la vanne de commande d'embrayage EV0, 4, du type proportionnel pilotée en débit.

Comme indiqué plus haut, en cas de défaillance de type court-circuit à la masse ou déconnexion d'une électrovanne d'engagement ou de sélection, 6, 7, 8, 9, la stratégie classique consiste à maintenir le rapport déjà engagé, ou à passer au neutre, si cela est encore possible.

Pour éviter les pannes immobilisantes, l'invention propose les mesures suivantes :
- dans tous les cas de défaillance d'électrovanne où tous les rapports ne sont plus disponibles, on interdit l'accès au mode automatique.
- si la transmission est en mode automatique au moment de la panne, elle passe en mode manuel dès la détection de la panne (en autorisant les rapports encore accessibles)
- si la transmission est en mode manuel au moment de la panne, la transmission reste en mode manuel, et le conducteur perd la possibilité de passer en mode automatique.

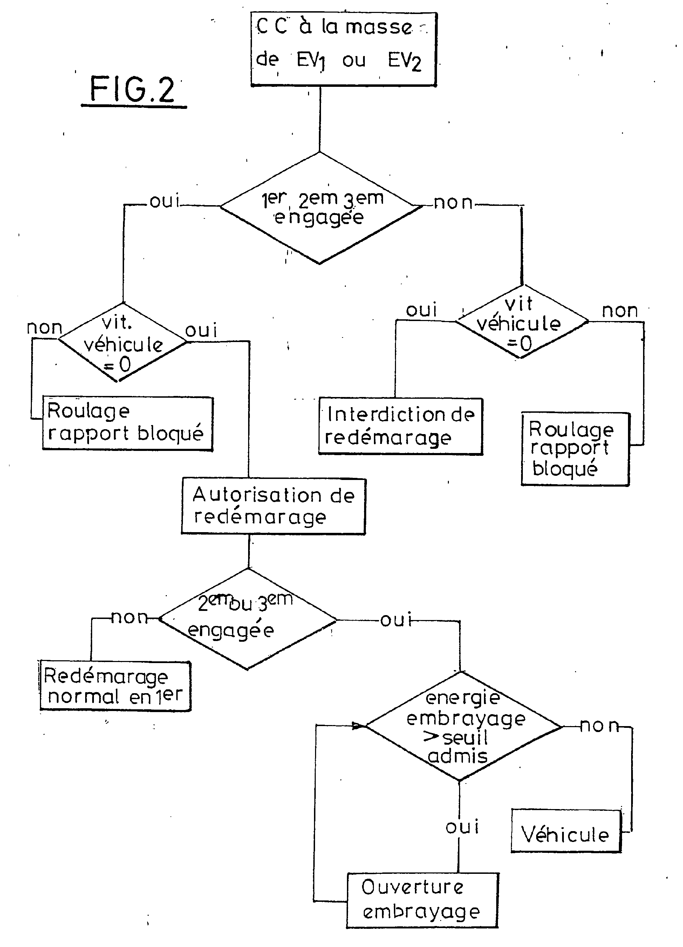

En se reportant à la figure 2, présentant de façon simplifiée un mode de commande dégradé de la transmission, applicable en cas de court-circuit à la masse (ou de déconnexion), de l'une ou l'autre des électrovannes d'engagement de vitesse EV1 ou EV2, on voit que si le véhicule roule (vitesse du véhicule non nulle), la transmission reste bloquée sur le rapport déjà engagé.

Dans le cas contraire, la stratégie mise en oeuvre dépend du rapport engagé au moment de la panne. Lorsque la transmission est en première en seconde ou en troisième, et que le véhicule s'est arrêté sur l'un de ces trois rapports il a l'autorisation de se remettre en route (« autorisation de redémarrage» du véhicule»). En première, le démarrage s'effectué normalement ; en seconde ou en troisième, il n'est autorisé que si l'énergie transitant par l'embrayage est inférieure à un seuil admis, et dans le cas contraire l'embrayage est automatiquement ouvert.

Si en revanche, la transmission n'est pas sur l'un des trois premiers rapports de marche avant lors de la panne, le véhicule n'aura pas la possibilité de redémarrer.

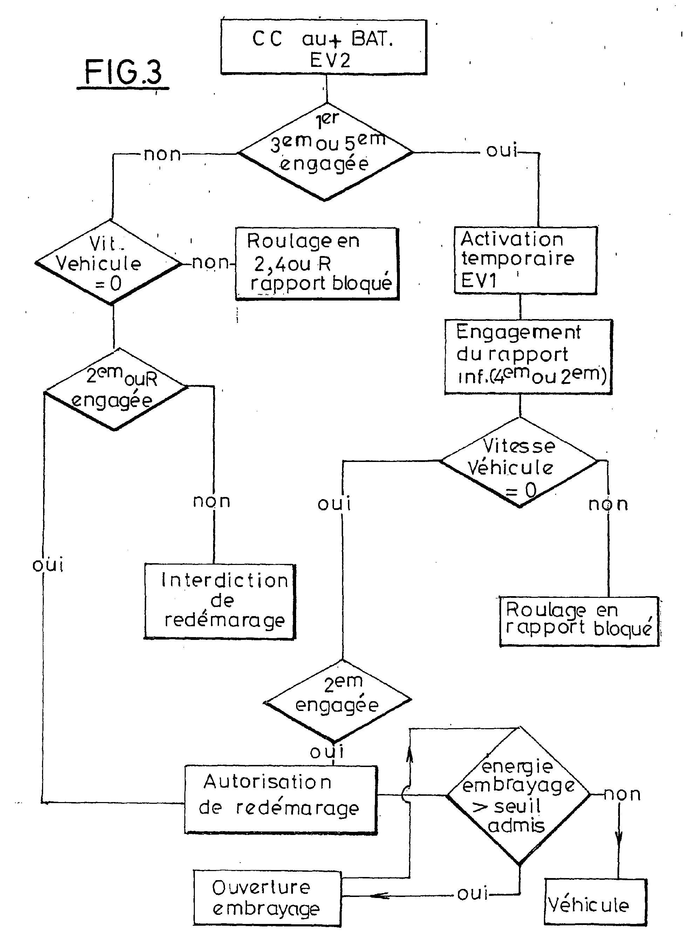

En cas de court-circuit d'alimentation de EV2, « EV2 au plus batterie », alors que la cinquième est engagée (cf. figure 3), la stratégie mise en oeuvre vise à éviter impérativement tout risque d'engagement intempestif de la marche arrière.

Si la première, la troisième ou la cinquième est engagée, l'électrovanne EV1 est activée temporairement, de manière à garder momentanément le neutre pour laisser le ressort de rappel en sélection écarter éventuellement la transmission de la ligne cinquième/marche arrière, puis EV1 est désactivée, et on laisse EV2 engager la seconde ou la marche arrière selon le cas. Si le véhicule est en roulage, la transmission reste alors bloquée sur ce nouveau rapport. Sinon, le véhicule a l'autorisation de redémarrer uniquement en seconde (pas en quatrième). Cette autorisation est cependant soumise à condition que la quantité d'énergie dissipée dans l'embrayage soit inférieure à un seuil, faute de quoi l'embrayage est automatiquement ouvert de manière à interdire le redémarrage.

Si l'on roule en seconde en quatrième ou en marche arrière lors du court circuit d'alimentation deEV2, la transmission reste bloquée sur le rapport engagé. Si on est à l'arrêt en quatrième, le redémarrage est interdit. Enfin, si on est à l'arrêt en seconde ou en marche arrière, l'autorisation de redémarrer est soumise à la même condition de seuil d'énergie dans l'embrayage que si la seconde a été engagée par EV2 après la désactivation de EV1.

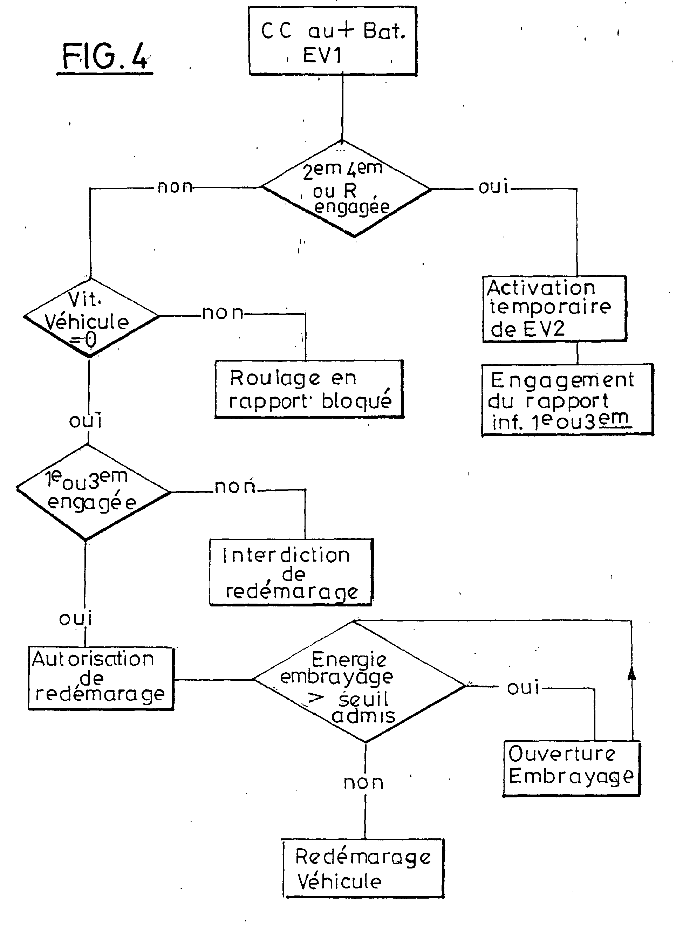

La stratégie mise en oeuvre en cas de court-circuit d'alimentation de EV1 est analogue (cf. figure 4). Si on est en seconde, quatrième ou marche arrière, EV2 est activée, de manière à garder momentanément le neutre pour laisser agir le ressort de rappel en sélection, puis EV2 est désactivée, et on laisse EV1 engager un rapport inférieur (première ou troisième).

Si la seconde, la quatrième ou la marche arrière ne sont pas engagées lors du court circuit, le véhicule continue à rouler avec sa transmission bloquée A l'arrêt, le véhicule n'a pas l'autorisation de redémarrer en cinquième. En première ou en troisième, le redémarrage est soumis à une condition de seuil maximum d'énergie dissipée dans l'embrayage, au dessus duquel ce dernier est systématiquement ouvert.

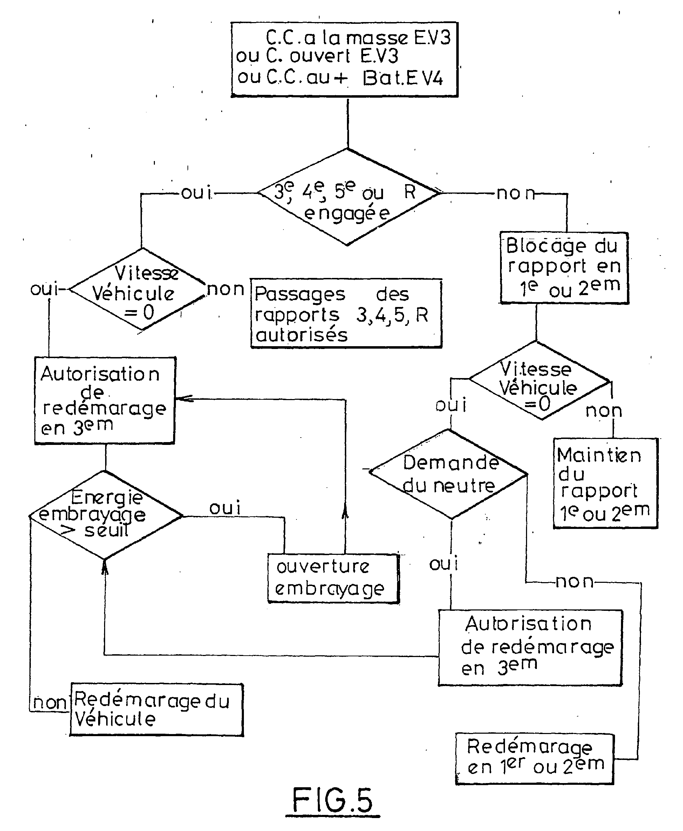

En cas de court-circuit à la masse ou déconnexion de EV3, ou de court-circuit d'alimentation de ECV4 (cf. figure 5), un mode dégradé troisième, quatrième, cinquième ou marche arrière est imposé à la transmission. En effet ces deux ces défaillances se traduisent par l'impossibilité d'atteindre la ligne de sélection 1 - 2.

Si la troisième, la quatrième ou la cinquième ou la marche arrière est engagée et si le véhicule roule lors de la panne de EV3, le passage sur l'ensemble de ces rapports est autorisé. A l'arrêt, le véhicule peut redémarrer en troisième, à condition que l'énergie dissipée dans l'embrayage soit inférieure à un seuil, car dans le cas contraire, l'embrayage est ouvert.

Si en revanche, on roule en première ou en seconde lors de la panne, le rapport engagé est bloqué. A l'arrêt, si le conducteur a demandé le neutre, le véhicule aura l'autorisation de redémarrer en troisième pour autant que le seuil d'énergie dissipée dans l'embrayage ne soit pas atteint. Toutefois, si le neutre n'est pas demandé, le véhicule pourra redémarrer en première ou en seconde sans condition particulière.

En résumé, en cas de court circuit à la masse ou de déconnexion de EV3, le mode dégradé trois, quatre, cinq, marche arrière est mis en place, avec démarrage en troisième dans certains cas, et sur une demande de passage trois-deux, la transmission reste en troisième. De façon analogue, en cas de court-circuit d'alimentation de EV4, un mode dégradé trois-quatre-cinq-marche arrière est mis en place grâce à la sollicitation de EV3 qui permet de revenir à la ligne trois-quatre, et le calculateur autorise exceptionnellement le démarrage en troisième.

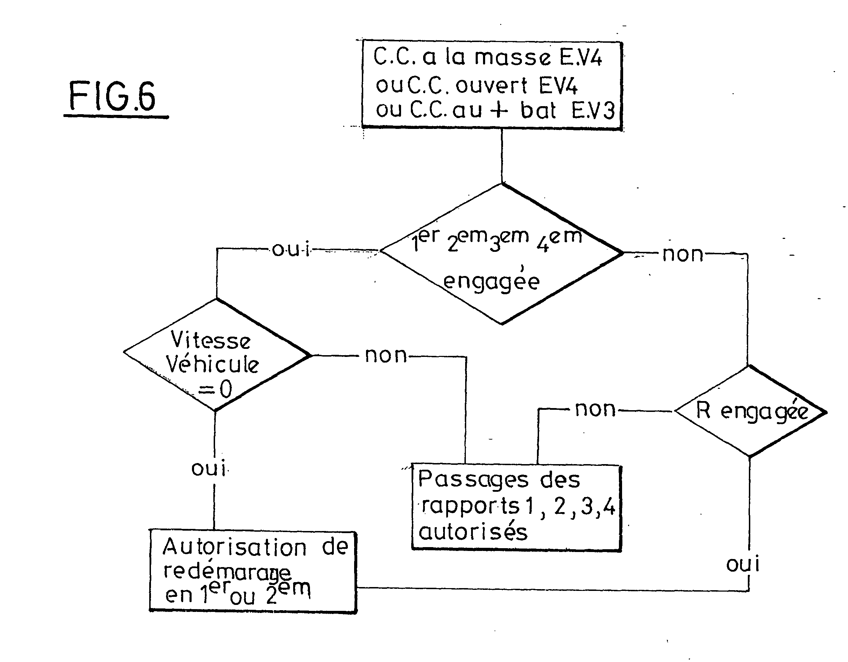

L'invention prévoit une autre stratégie en cas de court-circuit à la masse ou de déconnexion de EV4, ou de court-circuit d'alimentation de EV3 (cf. figure 6). Dans les deux cas, un mode dégradé un-deux-trois-quatre est mis en place, sur une demande de passage en cinquième, la transmission reste en quatrième, tandis qu'à l'arrêt, le véhicule est autorisé à redémarrer en première ou en seconde.

## Revendications

1. Procédé de commande des électrovannes (4, 6, 7, 8, 9) pilotant l'ouverture et la fermeture de l'embrayage d'entrée, la sélection et l'engagement des rapports d'une transmission automatisée disposant d'un mode automatique et d'un mode manuel, **caractérisé en ce que** la défaillance d'une des électrovannes impose à la transmission le mode manuel en autorisant le conducteur à engager les rapports restant disponibles.

2. Procédé de commande selon la revendication 1, **caractérisé en ce que** le court circuit à la masse ou la déconnexion d'une des électrovannes d'engagement de rapport (6, 7) en roulage, provoque le blocage de la transmission sur le rapport engagé.

3. Procédé de commande selon la revendication 1 ou 2, **caractérisé en ce que** le court-circuit d'alimentation de l'électrovanne d'engagement de la marche arrière et des rapports de rang pair (7) alors qu'un rapport de rang impair est engagé, provoque l'activation temporaire de l'électrovanne d'engagement des rapports de rang impair (6), pour permettre le rappel en sélection avant l'engagement d'un rapport de rang pair.

4. Procédé de commande selon la revendication 3, **caractérisé en ce que** l'activation temporaire de l'électrovanne d'engagement des rapports de rang impair (6), interdit le passage direct en marche arrière à partir du rapport de marche avant situé sur la même ligne que celle-ci.

5. Procédé de commande selon l'une des revendications précédentes, **caractérisé en ce que** le court-circuit d'alimentation de l'électrovanne d'engagement des rapports de rang impair (6) provoque l'activation temporaire de l'électrovanne d'engagement des rapports de rang pair (7) pour permettre le rappel en sélection avant l'engagement d'un autre rapport de rang impair.

6. Procédé de commande selon l'une des revendications précédentes, **caractérisé en ce que** lé court circuit à la masse ou la déconnexion de l'électrovanne due sélection des deux premiers rapports de marche avant (8) ou le court-circuit d'alimentation de l'électrovanne de sélection de la ligne de marche arrière (9) provoque l'adoption d'un mode dégradé trois-quatre-cinq-marche arrière.

7. Procédé de commande selon l'une des revendications précédentes, **caractérisé en ce que** le court-circuit à la masse ou la déconnexion de l'électrovanne de sélection de la ligne de marche arrière (9) ou le court-circuit d'alimentation de l'électrovanne de sélection des deux premiers rapports de marche avant (8) provoque l'adoption d'un mode dégradé un-deux-trois-quatre.

8. Procédé de commande selon la revendication 6, **caractérisé en ce que** si le court circuit à la masse ou la déconnexion de l'électrovanne de sélection des deux premiers rapports de marche avant (8) ou le court-circuit d'alimentation de l'électrovanne de sélection de la ligne de marche arrière (9) intervient lorsque le véhicule roule en première ou en seconde, la transmission reste bloquée sur le rapport engagé.

9. Procédé de commande selon la revendication 2, **caractérisé en ce que** si le véhicule est à l'arrêt lors du court circuit à la masse ou de la déconnexion d'une des électrovannes d'engagement de rapport (6, 7), le redémarrage du véhicule est interdit en quatrième et en cinquième, et autorisé en seconde, ou en troisième sous réserve que la quantité d'énergie dissipée dans l'embrayage soit inférieure à un seuil.

10. Procédé de commande selon la revendication 3 ou 4, **caractérisé en ce** si le véhicule est à l'arrêt lors du court-circuit d'alimentation de l'électrovanne d'engagement de la marche arrière et des rapports de rang pair (7), le redémarrage est autorisé en seconde ou en marche arrière si la quantité d'énergie dissipée dans l'embrayage est inférieure à un seuil.

11. Procédé de commande selon la revendication 5, **caractérisé en ce que** si le véhicule est à l'arrêt lors du court-circuit d'alimentation de l'électrovanne d'engagement des rapports de rang impair (6), le redémarrage en première ou en troisième est autorisé si la quantité d'énergie dissipée dans l'embrayage est inférieure à un seuil.

12. Procédé de commande selon la revendication 6, **caractérisé en ce que** si le véhicule est à l'arrêt lors du court circuit à la masse ou la déconnexion de l'électrovanne de sélection des deux premiers rapports de marche avant (8) ou du court-circuit d'alimentation de l'électrovanne de sélection de la ligne de marche arrière (9), le redémarrage est toujours autorisé en première ou en seconde, et en troisième si la quantité d'énergie dissipée dans l'embrayage est inférieure à un seuil.

13. Procédé de commande selon la revendication 7, **caractérisé en ce que** si le véhicule est à l'arrêt lors du court-circuit à la masse ou la déconnexion de l'électrovanne de sélection de la ligne de marche arrière (9) ou du court-circuit d'alimentation de l'électrovanne de sélection des deux premiers rapports de marche avant (8), le redémarrage est autorisé en première ou en seconde.

## Claims

1. Method for controlling the electrically-operated valves (4, 6, 7, 8, 9) that open and close the input clutch and select and engage the gear ratio in an automatic transmission that has an automatic mode and a manual mode, **characterized in that** failure of one of the electrically-operated valves forces the transmission into manual mode, allowing the driver to engage those gear ratios that remain available.

2. Control method according to Claim 1, **characterized in that** if one of the gear ratio engaging electrically-operated valves (6, 7) is shorted to earth or becomes disconnected while the vehicle is driving along, the transmission is locked in the gear ratio already engaged.

3. Control method according to Claim 1 or 2, **characterized in that** if the power supply to the electrically-operated valve used to engage reverse gear and even gear ratios (7) is shorted when an odd gear ratio is engaged, the electrically-operated valve used for engaging odd gear ratios (6) is temporarily activated to allow a return to selection mode before an even gear ratio is engaged.

4. Control method according to Claim 3, **characterized in that** temporary activation of the electrically-operated valve used to engage odd gear ratios (6) prevents direct passage into reverse gear from the forward gear ratio situated on the same line thereas.

5. Control method according to one of the preceding claims, **characterized in that** if the supply of power to the electrically-operated valve used to engage odd gear ratios (6) is shorted, the electrically-operated valve used for engaging even gear ratios (7) is temporarily activated in order to allow return to selection mode before another odd gear ratio is engaged.

6. Control method according to one of the preceding claims, **characterized in that** if the electrically-operated valve used for selecting the first two forward gear ratios (8) is shorted to earth or disconnected or if the supply of power to the electrically-operated valve used for selecting the reverse gear line (9) is shorted, then the transmission is forced to adopt a degraded mode comprising third-fourth-fifth-reverse gear.

7. Control method according to one of the preceding claims, **characterized in that** if the electrically-operated valve used for selecting the reverse gear line (9) is shorted to earth or disconnected or if the supply of power to the electrically-operated valve used to select the first two forward gear ratios (8) is shorted, the transmission is forced into a degraded mode comprising first-second-third-fourth gear.

8. Control method according to Claim 6, **characterized in that** if the electrically-operated valve used for selecting the first two forward gear ratios (8) is shorted to earth or disconnected, or if the supply of power to the electrically-operated valve used to select the reverse gear line (9) is shorted, while the vehicle is driving along in first or second gear, then the transmission remains stuck in the gear ratio already engaged.

9. Control method according to Claim 2, **characterized in that** if the vehicle is at a standstill when one of the electrically-operated valves used for engaging a gear ratio (6, 7) is shorted to earth or disconnected, the vehicle is prevented from restarting in fourth and in fifth and is allowed to restart in second, or in third provided that the amount of energy dissipated through the clutch is below a threshold value.

10. Control method according to Claim 3 or 4, **characterized in that** if the vehicle is at a standstill when the supply of power to the electrically-operated valve used to engage reverse gear and the even gear ratios (7) is shorted, the vehicle is allowed to restart in second or in reverse if the amount of energy dissipated through the clutch is below a threshold value.

11. Control method according to Claim 5, **characterized in that** if the vehicle is at a standstill when the supply of power to the electrically-operated valve used to engage the odd gear ratios (6) is shorted, the transmission is allowed to restart in first or in third if the amount of energy dissipated through the clutch is below a threshold value.

12. Control method according to Claim 6, **characterized in that** if the vehicle is at a standstill when the electrically-operated valve used to select the first two forward gear ratios (8) is shorted to earth or disconnected or when the supply of power to the electrically-operated valve used to select the reverse gear line (9) is shorted, restarting is still permitted in first or second, and in third if the amount of energy dissipated through the clutch is below a threshold value.

13. Control method according to Claim 7, **characterized in that** if the vehicle is at a standstill when the electrically-operated valve used for selecting the reverse gear line (9) is shorted to earth or disconnected or when the supply of power to the electrically-operated valve used for selecting the first two forward gear ratios (8) is shorted, the vehicle is allowed to restart in first or in second.

## Patentansprüche

1. Verfahren zur Betätigung von Magnetventilen (4, 6, 7, 8, 9), die das Öffnen und das Schließen der Eingangskupplung, die Wahl und das Einlegen der Gänge eines automatisierten Getriebes, das über einen Automatikmodus und einen manuellen Modus verfügt, steuern, **dadurch gekennzeichnet, dass** das Versagen eines der Magnetventile das Getriebe mit dem manuellen Modus beaufschlagt und dabei dem Fahrer gestattet, die verbleibenden zur Verfügung stehenden Gänge einzulegen.

2. Betätigungsverfahren nach Anspruch 1, **dadurch gekennzeichnet, dass** der Masseschluss oder die Trennung eines der Magnetventile (6, 7) zum Einlegen eines Gangs während des Fahrens die Sperrung des Getriebes in dem eingelegten Gang bewirkt.

3. Betätigungsverfahren nach Anspruch 1 oder 2, **dadurch gekennzeichnet, dass** der Versorgungskurzschluss des Magnetventils (7) zum Einlegen des Rückwärtsgangs und der geradzahligen Gänge, während ein ungeradzahliger Gang eingelegt ist, die vorübergehende Aktivierung des Magnetventils (6) zum Einlegen der ungeradzahligen Gänge bewirkt, um das Rückstellen der Wahl vor Einlegen eines geradzahligen Gangs zu gestatten.

4. Betätigungsverfahren nach Anspruch 3, **dadurch gekennzeichnet, dass** die vorübergehende Aktivierung des Magnetventils zum Einlegen der ungeradzahligen Gänge (6) das direkte Passieren in den Rückwärtsgang aus einem sich auf der gleichen Linie wie dieser befindenden Vorwärtsgang sperrt.

5. Betätigungsverfahren nach einem der vorhergehenden Ansprüche, **dadurch gekennzeichnet, dass** der Versorgungskurzschluss des Magnetventils (6) zum Einlegen der ungeradzahligen Gänge die vorübergehende Aktivierung des Magnetventils (7) zum Einlegen der geradzahligen Gänge bewirkt, um das Rückstellen der Wahl vor Einlegen eines anderen ungeradzahligen Gangs zu gestatten.

6. Betätigungsverfahren nach einem der vorhergehenden Ansprüche, **dadurch gekennzeichnet, dass** der Masseschluss oder die Trennung des Magnetventils (8) zur Wahl der beiden ersten Vorwärtsgänge oder der Versorgungskurzschluss des Magnetventils (9) zur Wahl der Rückwärtsganglinie das Einnehmen eines Notbetriebsmodus dritter-vierter-fünfter-Rückwärtsgang bewirkt.

7. Betätigungsverfahren nach einem der vorhergehenden Ansprüche, **dadurch gekennzeichnet, dass** der Masseschluss oder die Trennung des Magnetventils (9) zur Wahl der Rückwärtsganglinie oder der Versorgungskurzschluss des Magnetventils (8) zur Wahl der beiden ersten Vorwärtsgänge das Einnehmen eines Notbetriebsmodus erster-zweiter-drittervierter Gang bewirkt.

8. Betätigungsverfahren nach Anspruch 6, **dadurch gekennzeichnet, dass**, wenn der Masseschluss oder die Trennung des Magnetventils (8) zur Wahl der beiden ersten Vorwärtsgänge oder der Versorgungskurzschluss des Magnetventils (9) zur Wahl der Rückwärtsganglinie (9) erfolgt, wenn das Fahrzeug im ersten oder im zweiten Gang fährt, das Getriebe im eingelegten Gang gesperrt bleibt.

9. Betätigungsverfahren nach Anspruch 2, **dadurch gekennzeichnet, dass**, wenn das Fahrzeug beim Masseschluss oder bei der Trennung eines der Gangeinlegemagnetventile (6, 7) im Stillstand ist, das Wiederanlassen des Fahrzeugs im vierten und im fünften Gang gesperrt und im zweiten oder im dritten Gang gestattet ist, unter Vorbehalt, dass die in der Kupplung abgeführte Energiemenge unter einem Schwellwert liegt.

10. Betätigungsverfahren nach Anspruch 3 oder 4, **dadurch gekennzeichnet, dass**, wenn das Fahrzeug beim Versorgungskurzschluss des Magnetventils (7) zum Einlegen des Rückwärtsgangs und der geradzahligen Gänge im Stillstand ist, das Wiederanlassen im zweiten Gang oder im Rückwärtsgang gestattet wird, wenn die in der Kupplung abgeführte Energiemenge unter einem Schwellwert liegt.

11. Betätigungsverfahren nach Anspruch 5, **dadurch gekennzeichnet, dass**, wenn das Fahrzeug beim Versorgungskurzschluss des Magnetventils (6) zum Einlegen der ungeradzahligen Gänge im Stillstand ist, das Wiederanlassen im ersten oder im dritten Gang gestattet wird, wenn die in der Kupplung abgeführte Energiemenge unter einem Schwellwert liegt.

12. Betätigungsverfahren nach Anspruch 6, **dadurch gekennzeichnet, dass**, wenn das Fahrzeug beim Masseschluss oder bei der Trennung des Magnetventils (8) zur Wahl der beiden ersten Vorwärtsgänge oder beim Versorgungskurzschluss des Magnetventils (9) zur Wahl der Rückwärtsganglinie im Stillstand ist, das Wiederanlassen im ersten oder im zweiten Gang und im dritten Gang immer gestattet wird, wenn die in der Kupplung abgeführte Energiemenge unter einem Schwellwert liegt.

13. Betätigungsverfahren nach Anspruch 7, **dadurch gekennzeichnet, dass**, wenn das Fahrzeug beim Masseschluss oder bei der Trennung des Magnetventils (9) zur Wahl der Rückwärtsganglinie oder beim Versorgungskurzschluss des Magnetventils (8) zur Wahl der beiden ersten Vorwärtsgänge im Stillstand ist, das Wiederanlassen im ersten oder im zweiten Gang gestattet wird.
